# EUROPEAN PATENT APPLICATION

(11) **EP 4 793 171 A1**
(43) Date of publication of application: **19.08.2026**
(21) Application number: 26157794.4
(22) Date of filing: 11.02.2026
(51) Int. Cl.: B64C 11/30, F02C 3/107, F02C 7/06, F02K 3/06

(54) **ASSEMBLY FOR GAS TURBINE ENGINE**

(30) Priority: 12.02.2025 US 202563757382 P; 09.12.2025 US 202519412988
(71) Applicant: General Electric Company, Cincinnati, Ohio 45215 (US); GE Aerospace Poland Sp. z o.o., 02-256 Warsaw (PL)
(72) Inventor: LESLIE, Kevin, Evendale, 45215 (US); PIEKARSKI, Stanis aw Lech, 02-256 Warsaw (PL); HIGGINS, Craig, Evendale, 45215 (US); GLYNN, Christopher, Evendale, 45215 (US)
(74) Representative: Openshaw & Co.

(57) **Abstract**

An assembly (200) for a gas turbine engine (100), the gas turbine engine (100) defining an axial direction and a radial direction, the assembly (200) including a hub shaft (202) configured to support a fan blade (154) of the gas turbine, a propellor shaft (204) configured to connect to a gearbox (155), the propellor shaft (204) disposed aft of the hub shaft (202) in the axial direction, a connector (206) fixing the hub shaft (202) to the propellor shaft (204), and a bearing (208) disposed on the hub shaft (202) forward of the connector (206) in the axial direction.

## Description

### CROSS-REFERENCE TO RELATED APPLICATIONS

This application is a non-provisional application claiming the benefit of priority under 35 U.S.C. § 119(e) to U.S. Provisional Application No. 63/757,382, filed February 12, 2025, which is hereby incorporated by reference in its entirety.

### FIELD

The present disclosure relates to an assembly for a fan blade of a gas turbine engine.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbines which extract energy from the combustion gases for powering the compressors, as well as for producing useful work to propel an aircraft in flight. The turbomachine is mechanically coupled to the fan for driving the fan during operation.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of a gas turbine engine according to the present disclosure.
FIG. 2 is a magnified, schematic view of an assembly for a fan blade of the gas turbine engine according to the present disclosure.
FIG. 3 is an exemplary chart illustrating moments applied to the assembly of FIG. 2.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first," "second," "third," and other ordinals are used to distinguish one component from another and are not intended to signify location or importance of the individual components.

A "moment" is a measure of a turning effect on an object of a force around a pivot connected to the object, such as a torque.

The present disclosure is generally related to an assembly for a fan blade of a gas turbine engine, particularly in the placement of joints connecting shafts in an open rotor engine. In the open rotor engine, the fan is supported on the aft side of a fan disk such that moments are absorbed by the joints. The joints connect a hub shaft that supports the fan blade and a propellor shaft that is connected to a gearbox. Uneven blade movement about the azimuth may induce moments in the shafts. Bearings disposed aft of the joints reduce moments caused by imbalances of aerodynamic loads on the fan blades, and such bearings are typically disposed on the propellor shaft.

By moving the bearing onto the hub shaft forward of the joint connecting the hub shaft and the propellor shaft, moments caused by the fan blade are reduced such that the joints do not experience undue torque. The isolation of the bolted joint from the bearing reduces or eliminates the 1P moments, which allows for smaller bolt sizes and/or counts and reduces overall mass of the assembly.

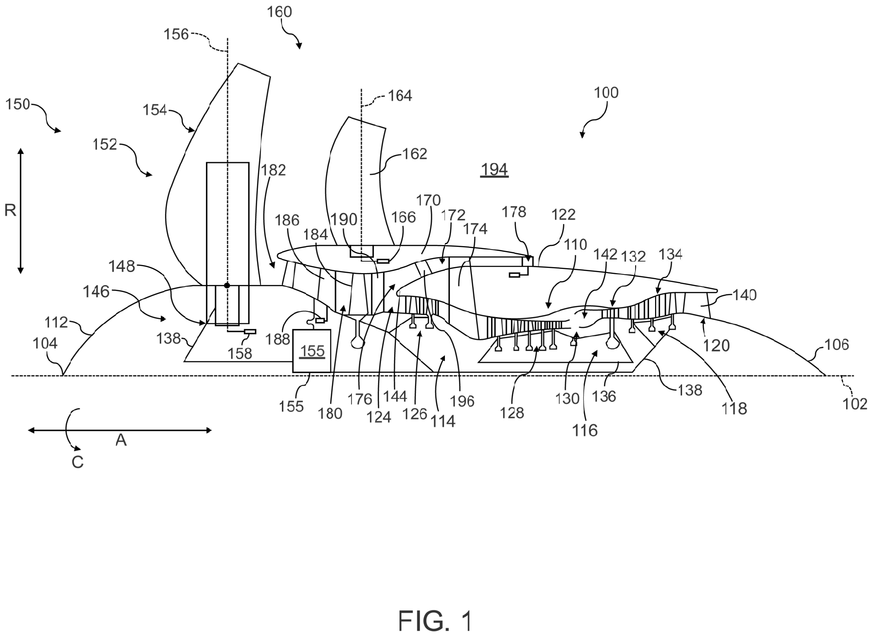

Referring now to the drawings, wherein identical numerals indicate the same elements throughout the figures, FIG. 1 is a schematic cross-sectional view of a gas turbine engine 100 in accordance with an embodiment of the present disclosure. Particularly, FIG. 1 provides a gas turbine engine having a rotor assembly with a single stage of unducted rotor blades. In such a manner, the rotor assembly may be referred to herein as an "unducted fan," or the entire gas turbine engine 100 may be referred to as an open rotor engine. In addition, the gas turbine engine 100 of FIG. 1 includes a third stream extending from the compressor section to a rotor assembly flow path over the turbomachine, as will be explained in more detail below.

For reference, the gas turbine engine 100 defines an axial direction A, a radial direction R, and a circumferential direction C. Moreover, the gas turbine engine 100 defines an axial centerline 102 that extends along the axial direction A. In general, the axial direction A extends parallel to the axial centerline 102, the radial direction R extends outward from and inward to the axial centerline 102 in a direction orthogonal to the axial direction A, and the circumferential direction extends three hundred sixty degrees (360°) around the axial centerline 102. The gas turbine engine 100 extends between a forward end 104 and an aft end 106, e.g., along the axial direction A.

The gas turbine engine 100 includes a fan section 150, a turbomachine 110, and a spinner 112. Generally, the turbomachine 110 includes, in serial flow order, a compressor section 114, a combustion section 116, a turbine section 118, and an exhaust section 120. Particularly, as shown in FIG. 1, the turbomachine 110 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 of the compressor section 114 for pressurizing the air that enters the turbomachine 110 through core inlet 124. A high pressure ("HP"), multi-stage, axial-flow compressor 128 of the compressor section 114 receives pressurized air from the LP compressor 126 and further increases the pressure of the air. The pressurized air stream flows downstream to a combustor 130 of the combustion section 116 where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed or pressure values.

The high energy combustion products flow from the combustor 130 downstream to an HP turbine 132 of the turbine section 118. The HP turbine 132 drives the HP compressor 128 through a high pressure shaft 136. In this regard, the HP turbine 132 is drivingly coupled with the HP compressor 128. The high energy combustion products then flow to an LP turbine 134 of the turbine section 118. The LP turbine 134 drives the LP compressor 126 and components of the fan section 150 through an LP shaft 138. In this regard, the LP turbine 134 is drivingly coupled with the LP compressor 126 and components of the fan section 150. The LP shaft 138 is coaxial with the HP shaft 136 in this example embodiment. After driving the HP and LP turbines 132, 134, the combustion products exit the turbomachine 110 through a turbomachine exhaust nozzle 140 of the exhaust section 120.

Accordingly, the turbomachine 110 defines a working gas flow path or core duct 142 that extends between the core inlet 124 and the turbomachine exhaust nozzle 140. The core duct 142 is an annular duct positioned generally inward of the core cowl 122 along the radial direction R.

The fan section 150 includes a fan 152, which is the primary fan in this example embodiment. For the depicted embodiment of FIG. 1, the fan 152 is an open rotor or unducted fan 152. In such a manner, the gas turbine engine 100 may be referred to as an open rotor engine.

As depicted, the fan 152 includes an array of fan blades 154 (only one shown in FIG. 1). The fan blades 154 are rotatable, e.g., about the axial centerline 102. As noted above, the fan 152 and the spinner 112 are drivingly coupled with the LP turbine 134 via the LP shaft 138. For the embodiments shown in FIG. 1, the fan 152 is coupled with the LP shaft 138 via a gearbox 155 that is a speed reduction gearbox, e.g., in an indirect-drive or geared-drive configuration.

It will be appreciated that the fan blades 154 may be configured to be composite fan blades, e.g., formed in whole or in part of a composite material. The term composite material as used herein may be defined as a material containing a reinforcement such as fibers or particles supported in a binder or matrix material. Composites include metallic and non-metallic composites.

Moreover, the array of fan blades 154 can be arranged in equal spacing around the axial centerline 102. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

As depicted, it will be appreciated that the fan section 150 includes a variable pitch fan assembly 146 and a disk 148 having a plurality of disk segments arranged in a spaced apart manner. The variable pitch fan assembly 146 is coupled to the disk 148, comprising a trunnion coupled to the disk 148 and the fan blade 154. The disk 148 has a generally annular shape about the axial direction A. Further, the fan blades 154 extend outwardly from the disk 148 generally along the radial direction R. Each fan blade 154 is also rotatable relative to the disk 148 about the central blade axis 156 by virtue of the fan blades 154 being operatively coupled to the actuator(s) 158 configured to collectively vary the pitch of the fan blades 154, e.g., in unison.

The fan section 150 further includes a fan guide vane array 160 that includes fan guide vanes 162 (only one shown in FIG. 1) disposed around the axial centerline 102. For this embodiment, the fan guide vanes 162 are not rotatable about the axial centerline 102. Each fan guide vane 162 has a root and a tip and a span defined therebetween. The fan guide vanes 162 may be unshrouded, as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and, therefore, may be used to change a pitch of the fan guide vane 162 about its respective central blade axis 164. In other embodiments, each fan guide vane 162 may be fixed or unable to be pitched about its central blade axis 164. The fan guide vanes 162 are mounted to a fan cowl 170.

As shown in FIG. 1, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 110 (e.g., without passage through the HP compressor 128 and combustion section 116 for the embodiment depicted). The ducted fan 184 is rotatable about the same axis (e.g., the axial centerline 102) as the fan blade 154. The ducted fan 184 is, for the embodiment depicted, driven by the low pressure turbine 134 (e.g., coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the axial centerline 102. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flow path, or simply a fan duct 172. According to this embodiment, the fan flow path or fan duct 172 may be understood as forming at least a portion of the third stream of the gas turbine engine 100.

Incoming air may enter through the fan duct 172, through a fan duct inlet 176, and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially extending, circumferentially spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The gas turbine engine 100 also defines or includes an inlet duct 180. The inlet duct 180 extends between an engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the gas turbine engine 100 further includes an array of inlet guide vanes 186 positioned in the inlet duct 180 upstream of the ducted fan 184 and downstream of the engine inlet 182. The array of inlet guide vanes 186 are arranged around the axial centerline 102. For this embodiment, the inlet guide vanes 186 are not rotatable about the axial centerline 102. Each inlet guide vane 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. In other embodiments, each inlet guide vanes 186 may be fixed or unable to be pitched about its central blade axis.

Further, located downstream of the ducted fan 184 and upstream of the fan duct inlet 176, the gas turbine engine 100 includes an array of outlet guide vanes (OGVs) 190. As with the array of inlet guide vanes 186, the array of outlet guide vanes 190 are not rotatable about the axial centerline 102. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the gas turbine engine 100 includes one or more actuators 158 for modulating the variable geometry exhaust nozzle. For example, the variable geometry exhaust nozzle may be configured to vary a total cross-sectional area (e.g., an area of the nozzle in a plane perpendicular to the axial centerline 102) to modulate an amount of thrust generated based on one or more engine operating conditions (e.g., temperature, pressure, mass flowrate, etc. of an airflow through the fan duct 172). A fixed geometry exhaust nozzle may also be adopted.

The gas turbine engine 100, as noted above includes a primary fan (e.g., the fan 152 having fan blades 154), and a secondary fan (e.g., the ducted fan 184 having fan blades). Airflow from the fan 152 is split between a bypass passage 194 and the inlet duct 180 by an inlet splitter. Airflow from the ducted fan 184 is split between the fan duct 172 and the core duct 142 by the leading edge 144 (sometimes also referred to as a fan duct splitter). The gas turbine engine 100 in such a form defines a "first" stream through the bypass passage 194, a "second" stream through the core duct 142, and a "third" stream through the fan duct 172.

Moreover, referring still to FIG. 1, in exemplary embodiments, air passing through the fan duct 172 may be relatively cooler (e.g., lower temperature) than one or more fluids utilized in the turbomachine 110. In this way, one or more heat exchangers 196 may be positioned in thermal communication with the fan duct 172. For example, one or more heat exchangers 196 may be disposed within the fan duct 172 and utilized to cool one or more fluids from the core engine with the air passing through the fan duct 172, as a resource for removing heat from a fluid, e.g., compressor bleed air, oil, or fuel.

Although not depicted, the heat exchanger 196 may be an annular heat exchanger extending substantially 360 degrees in the fan duct 172 (e.g., at least 300 degrees, such as at least 330 degrees). In such a manner, the heat exchanger 196 may effectively utilize the air passing through the fan duct 172 to cool one or more systems of the gas turbine engine 100 (e.g., lubrication oil systems, compressor bleed air, electrical components, etc.). The heat exchanger 196 uses the air passing through the fan duct 172 as a heat sink and correspondingly increases the temperature of the air downstream of the heat exchanger 196 exiting the fan exhaust nozzle 178.

It should be appreciated that the gas turbine engine 100 depicted in FIG. 1 and described herein is by way of example only, and that embodiments of the present disclosure may be incorporated in other gas turbine engines as well (such as a ducted turbofan engine).

It will be appreciated, however, that the exemplary engine 100 is provided by way of example only. In other exemplary embodiments, the gas turbine engine 100 may have any other configuration. For example, in other exemplary embodiments, the turbomachine 110 may have any other number and arrangement of shafts, spools, compressors, turbines, etc. Further, in other exemplary embodiments, the gas turbine engine 100 may alternatively be configured as a ducted turbofan engine (including an outer nacelle surrounding the fan 152 and a portion of the turbomachine 110); as a direct drive gas turbine engine (may not include a reduction gearbox, such as gearbox 155); as a two-stream gas turbine engine (may not include the fan duct 172); etc.

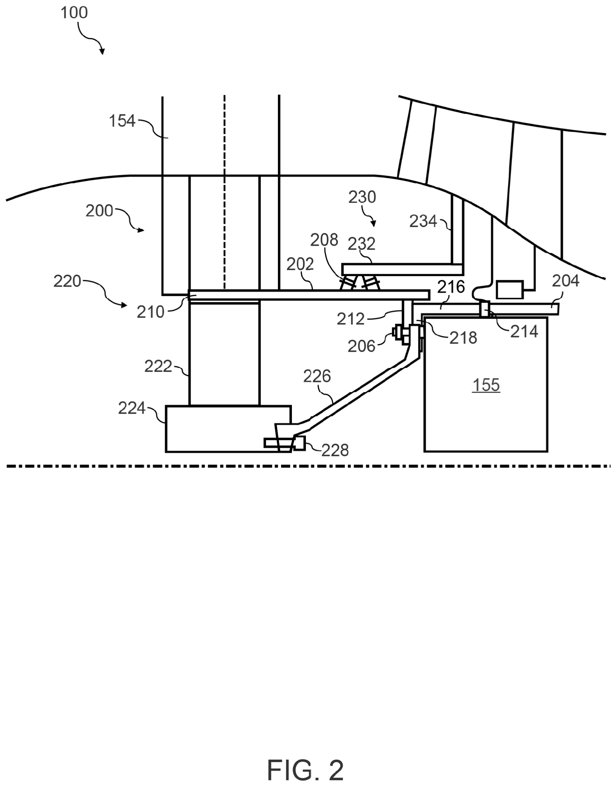

Now referring to FIG. 2, a magnified view of the gas turbine engine 100 illustrating an assembly 200 for connecting a fan blade 154 to a gearbox 155 is provided. The assembly 200 includes a hub shaft 202, a propellor shaft 204, a connector 206 connecting the hub shaft 202 to the propellor shaft 204, and a bearing 208 disposed on the hub shaft 202.

The hub shaft 202 is configured to support the fan blade 154. More specifically, the hub shaft 202 is connected to the fan blade 154. The hub shaft 202 includes a first base 210 and a first flange 212 extending inward from the first base 210 in the radial direction R. The first base 210 supports the fan blade 154 from beneath. The hub shaft 202 disposed inward of the fan blade 154 in the radial direction R.

The propellor shaft 204 is configured to connect to a gearbox 155. In particular, the propellor shaft 204 is connected to the gearbox 155 with a gearbox connector 214 such that the propellor shaft 204 rotates with the gearbox 155 and rotates the hub shaft 202. The propellor shaft 204 is disposed aft of the hub shaft 202 in the axial direction A. The propellor shaft 204 includes a second base 216 and a second flange 218 extending inward from the second base 216 in the radial direction R. In the arrangement shown, the hub shaft 202 is generally outward and forward of the propellor shaft 204. Specifically, the first base 210 is disposed outward of the second base 216 in the radial direction R, and the first flange 212 is disposed forward of the second flange 218 in the axial direction A.

The connector 206 fixes the hub shaft 202 to the propellor shaft 204. More specifically, the first flange 212 and the second flange 218 abut each other, and the connector 206 is configured to fix the first flange 212 and the second flange 218 to the gearbox 155, and to fix the first flange 212 and the second flange 218 to each other. The connector 206 is any suitable type to join the first flange 212 and the second flange 218, such as one of a bolted joint, a spline, a rabbet interface, shear bolts, a dowel pin, or combinations thereof. The first flange 212 and the second flange 218 define respective voids therethrough that allow the connector 206 to extend to the gearbox 155.

The bearing 208 reduces moments applied to the hub shaft 202 and the propellor shaft 204. More specifically, as described in further detail below, the bearing 208 is positioned on the first base 210 to reduce a moment applied to the connector 206 by the fan blade 154. The bearing 208 is disposed on the hub shaft 202 forward of the connector 206 in the axial direction A, which allows the bearing 208 to absorb movements from the fan blade 154 before reaching the connector 206. The connector 206 is disposed inward of the bearing 208 in the radial direction R, which further reduces the moment applied to the connector 206. It will be appreciated that the first flange 212 may be aligned with the bearing 208 or disposed aft of the bearing 208 in the axial direction A. The bearing 208 may be a suitable type, such as a tapered roller bearing.

The gas turbine engine 100 includes a fan pitch actuation system (FPAS) 220 configured to rotate the fan blade 154. The FPAS 220 includes a trunnion 222 and a disk 224. An actuator (such as the actuator 158 of FIG. 1) rotates the fan blade 154 within the trunnion 222, and the disk 224 supports the trunnion 222. The first flange 212 and the second flange 218 are connected to the disk 224 by a shaft 226. The shaft 226 is connected to the first and second flanges 212, 218 by the connector 206, and the shaft 226 is connected to the disk 224 by a disk connector 228. The disk connector 228 may be a similar device as the connector 206, e.g., one of a bolted joint, a spline, a rabbet interface, shear bolts, a dowel pin, or combinations thereof.

The gas turbine engine 100 includes a bearing frame 230 connecting the bearing 208 to the spinner 112. The bearing frame 230 includes a radial portion 232 fixed to the bearing 208 and an axial portion 234 fixed to the spinner 112. The radial portion 232 reduces or inhibits movement of the bearing 208 in the radial direction R, and the axial portion 234 reduces or inhibits movement of the bearing 208 in the axial direction A. While shown as a two-piece, L-shaped structure, the bearing frame 230 may have any suitable shape or arrangement to fix the bearing 208 to the spinner 112.

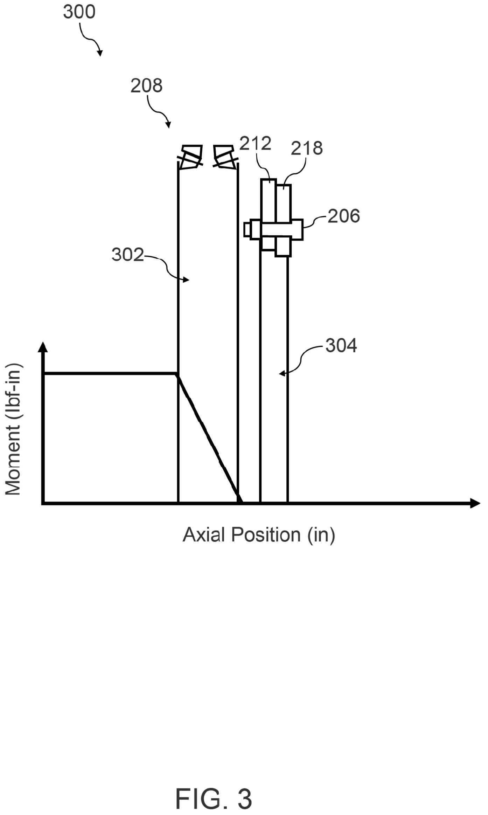

With reference to FIG. 3, a chart 300 of moments applied to the assembly 200 of the gas turbine engine 100 is provided. The chart 300 has a vertical axis showing values for moments applied to the assembly 200 in units of pound-force-inch (lbf-in) and a horizontal axis showing values for an axial position on the assembly 200 in inches (in). In particular, a first region 302 indicates the change in the moment along the assembly 200 (specifically, along the hub shaft 202) caused by absorption by the bearing 208. A second region 304 indicates the moment absorbed by the connector 206. Because the bearing 208 is disposed forward of the connector 206 in the axial direction A, the bearing 208 is positioned to reduce the moment applied to the connector 206 by the fan blade 154. That is, the bearing 208 is configured to reduce the moment from the fan blade 154 to zero, such that components aft of the bearing 208 experience no moment from the fan blade 154. It will be appreciated that, while the connector 206 is shown fully aft of the bearing 208, and thus experiences no moment from the fan blade 154, the connector 206 may have an axial position in the first region 302 such that the connector 206 experiences less than all of the moment from the fan blade 154.

By moving the bearing onto the hub shaft forward of the joint connecting the hub shaft and the propellor shaft, moments caused by imbalanced aerodynamic loads are reduced such that the joints do not experience undue torque. The isolation of the bolted joint from the bearing reduces or eliminates the moments, which allows for smaller bolt sizes and/or counts and reduces overall mass of the assembly.

Further aspects are provided by the subject matter of the following clauses:

An assembly for a gas turbine engine, the gas turbine engine defining an axial direction and a radial direction, the assembly including a hub shaft configured to support a fan blade of the gas turbine, a propellor shaft configured to connect to a gearbox, the propellor shaft disposed aft of the hub shaft in the axial direction, a connector fixing the hub shaft to the propellor shaft, and a bearing disposed on the hub shaft forward of the connector in the axial direction.

The assembly of any of the preceding clauses, wherein the hub shaft includes a first base and a first flange extending from the first base, the propellor shaft includes a second base and a second flange extending from the second base, and the connector fixes the first flange to the second flange.

The assembly of any of the preceding clauses, wherein the connector is configured to fix the first flange and the second flange to the gearbox.

The assembly of any of the preceding clauses, wherein the first flange extends inward in the radial direction from the first base, and the second flange extends inward in the radial direction from the second base.

The assembly of any of the preceding clauses, wherein the first base is disposed outward of the second base in the radial direction.

The assembly of any of the preceding clauses, wherein the first flange is disposed forward of the second flange in the axial direction.

The assembly of any of the preceding clauses, wherein the first flange and the second flange abut each other.

The assembly of any of the preceding clauses, wherein the bearing is positioned to reduce a moment applied to the connector by the fan blade.

The assembly of any of the preceding clauses, wherein the connector is one of a bolted joint, a spline, a rabbet interface, shear bolts, a dowel pin, or combinations thereof.

The assembly of any of the preceding clauses, wherein the connector is disposed inward of the bearing in the radial direction.

The assembly of any of the preceding clauses, wherein the hub shaft is configured to be disposed inward of the fan blade in the radial direction.

The assembly of any of the preceding clauses, wherein the bearing is a tapered roller bearing.

The assembly of any of the preceding clauses, further including a shaft connecting the first flange and the second flange to a disk of the gas turbine engine

A gas turbine engine defining an axial direction and a radial direction, the gas turbine engine including a fan including a fan blade, a gearbox, and an assembly for connecting the fan blade to the gearbox, the assembly including a hub shaft supporting the fan blade, a propellor shaft supported by the gearbox, the propellor shaft disposed aft of the hub shaft in the axial direction, a connector fixing the hub shaft to the propellor shaft, and a bearing disposed on the hub shaft forward of the connector in the axial direction.

The gas turbine engine of any of the preceding clauses, wherein the fan is an unducted fan.

The gas turbine engine of any of the preceding clauses, wherein the hub shaft includes a first base and a first flange extending from the first base, the propellor shaft includes a second base and a second flange extending from the second base, and the connector fixes the first flange to the second flange.

The gas turbine engine of any of the preceding clauses, wherein the connector is configured to fix the first flange and the second flange to the gearbox.

The gas turbine engine of any of the preceding clauses, wherein the first flange extends inward in the radial direction from the first base, and the second flange extends inward in the radial direction from the second base.

The gas turbine engine of any of the preceding clauses, wherein the first base is disposed outward of the second base in the radial direction.

The gas turbine engine of any of the preceding clauses, wherein the first flange is disposed forward of the second flange in the axial direction.

The gas turbine engine of any of the preceding clauses, wherein the bearing is positioned to reduce a moment applied to the connector by the fan blade.

The gas turbine engine of any of the preceding clauses, further including a disk and a shaft connecting the first flange and the second flange to the disk.

An assembly for a gas turbine engine, the gas turbine engine defining an axial direction and a radial direction, the assembly comprising: a hub shaft supporting a fan blade of the gas turbine engine; a propellor shaft connected to a gearbox, the propellor shaft disposed aft of the hub shaft in the axial direction; a connector fixing the hub shaft to the propellor shaft; and a bearing disposed on the hub shaft forward of the connector in the axial direction.

The assembly of any of the preceding clauses, wherein the hub shaft includes a first base and a first flange extending from the first base, the propellor shaft includes a second base and a second flange extending from the second base, and the connector fixes the first flange to the second flange.

The assembly of any of the preceding clauses, wherein the first flange and the second flange are fixed to the gearbox via the connector.

The assembly of any of the preceding clauses, wherein the first flange extends inward in the radial direction from the first base, and the second flange extends inward in the radial direction from the second base.

The assembly of any of the preceding clauses, wherein the first base is disposed outward of the second base in the radial direction.

The assembly of any of the preceding clauses, wherein the first flange is disposed forward of the second flange in the axial direction.

The assembly of any of the preceding clauses, wherein the first flange and the second flange abut each other.

The assembly of any of the preceding clauses, further comprising a shaft connecting the first flange and the second flange to a disk of the gas turbine engine.

The assembly of any of the preceding clauses, wherein the bearing is positioned to reduce a moment applied to the connector by the fan blade.

The assembly of any of the preceding clauses, wherein the connector is one of a bolted joint, a spline, a rabbet interface, shear bolts, a dowel pin, or combinations thereof.

The assembly of any of the preceding clauses, wherein the connector is disposed inward of the bearing in the radial direction.

The assembly of any of the preceding clauses, wherein the bearing is a tapered roller bearing.

A gas turbine engine defining an axial direction and a radial direction, the gas turbine engine comprising: a fan including a fan blade; a gearbox; and an assembly for connecting the fan blade to the gearbox, the assembly comprising: a hub shaft supporting the fan blade; a propellor shaft supported by the gearbox, the propellor shaft disposed aft of the hub shaft in the axial direction; a connector fixing the hub shaft to the propellor shaft; and a bearing disposed on the hub shaft forward of the connector in the axial direction.

The gas turbine engine of any of the preceding clauses, wherein the fan is an unducted fan.

The gas turbine engine of any of the preceding clauses, wherein the hub shaft includes a first base and a first flange extending from the first base, the propellor shaft includes a second base and a second flange extending from the second base, and the first flange is fixed to the second flange via the connector.

The gas turbine engine of any of the preceding clauses, wherein the first flange and the second flange are fixed to the gearbox via the connector.

The gas turbine engine of any of the preceding clauses, wherein the first flange extends inward in the radial direction from the first base, and the second flange extends inward in the radial direction from the second base.

The gas turbine engine of any of the preceding clauses, wherein the first base is disposed outward of the second base in the radial direction.

The gas turbine engine of any of the preceding clauses, further comprising a disk, wherein the assembly further comprises a shaft connecting the first flange and the second flange to the disk.

The gas turbine engine of any of the preceding clauses, wherein the bearing is positioned to reduce a moment applied to the connector by the fan blade.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An assembly (200) for a gas turbine engine (100), the gas turbine engine (100) defining an axial direction and a radial direction, the assembly (200) comprising:
a hub shaft (202) configured to support a fan blade (154) of the gas turbine;
a propellor shaft (204) configured to connect to a gearbox (155), the propellor shaft (204) disposed aft of the hub shaft (202) in the axial direction;
a connector (206) fixing the hub shaft (202) to the propellor shaft (204); and
a bearing (208) disposed on the hub shaft (202) forward of the connector (206) in the axial direction.

2. The assembly (200) of any of the preceding claims, wherein the hub shaft (202) includes a first base (210) and a first flange (212) extending from the first base (210), the propellor shaft (204) includes a second base (216) and a second flange (218) extending from the second base (216), and the connector (206) fixes the first flange (212) to the second flange (218).

3. The assembly (200) of any of the preceding claims, wherein the first flange (212) and the second flange (218) are fixed to the gearbox (155) via the connector (206).

4. The assembly (200) of any of the preceding claims, wherein the first flange (212) extends inward in the radial direction from the first base (210), and the second flange (218) extends inward in the radial direction from the second base (216).

5. The assembly (200) of any of the preceding claims, wherein the first base (210) is disposed outward of the second base (216) in the radial direction.

6. The assembly (200) of any of the preceding claims, wherein the first flange (212) is disposed forward of the second flange (218) in the axial direction.

7. The assembly (200) of any of the preceding claims, wherein the first flange (212) and the second flange (218) abut each other.

8. The assembly (200) of any of the preceding claims, wherein the bearing (208) is positioned to reduce a moment applied to the connector (206) by the fan blade (154).

9. The assembly (200) of any of the preceding claims, wherein the connector (206) is one of a bolted joint, a spline, a rabbet interface, shear bolts, a dowel pin, or combinations thereof.

10. The assembly (200) of any of the preceding claims, wherein the connector (206) is disposed inward of the bearing (208) in the radial direction.

11. The assembly (200) of any of the preceding claims, wherein the hub shaft (202) is configured to be disposed inward of the fan blade (154) in the radial direction.

12. The assembly (200) of any of the preceding claims, wherein the bearing (208) is a tapered roller bearing (208).

13. A gas turbine engine (100) defining an axial direction and a radial direction, the gas turbine engine (100) comprising:
a fan (152, 184) including a fan blade (154);
a gearbox (155); and
the assembly (200) of any of the preceding claims.

14. The gas turbine engine (100) of claim 13, wherein the fan (152, 184) is an unducted fan (152, 184).

15. The gas turbine engine (100) of any of the preceding claims, further comprising a disk (224) and a shaft (226) connecting the first flange (212) and the second flange (218) to the disk (224).
